# EUROPEAN PATENT APPLICATION

(11) **EP 4 044 583 A1**
(43) Date of publication of application: **17.08.2022**
(21) Application number: 22155089.0
(22) Date of filing: 03.02.2022
(51) Int. Cl.: H04N 5/232, G06F 9/54, G06F 13/10

(54) **INFORMATION PROCESSING APPARATUS AND CONTROL METHOD**

(30) Priority: 16.02.2021 JP 2021022473
(71) Applicant: Lenovo (Singapore) Pte. Ltd., New Tech Park 556741 (SG)
(72) Inventor: IMAI, Takumi, Kanagawa, 3-6-1-21F (JP); TRUONG, Huy, Kanagawa, 3-6-1-21F (JP); FUTAMI, Kyohei, Kanagawa, 3-6-1-21F (JP)
(74) Representative: Openshaw & Co.

(57) **Abstract**

To achieve more efficient processing when a plurality of applications use a camera, an information processing apparatus includes: a video acquisition unit configured to acquire imaging data from an imaging unit in response to processing of a first application; a first video processing unit configured to store the imaging data acquired by the video acquisition unit in a shared memory so as to be usable by processing of a second application other than the first application; and a second video processing unit configured to acquire the imaging data from the shared memory at a time interval corresponding to the second application and transmit the imaging data to the second application.

## Description

### Field of the Invention

The present invention relates to an information processing apparatus and a control method.

### Background of the Invention

Cameras in information processing apparatuses such as personal computers are increasingly used nowadays. For example, cameras are used not only for capturing still images and moving images but also for many other purposes such as video conferencing, human detection, user authentication, gaze point detection, and gesture recognition. For example, Japanese Unexamined Patent Application Publication No. 2015-082295 discloses a technique of detecting humans using a camera.

### Summary of the Invention

Access to a camera is exclusive. Accordingly, when one application is using the camera, the other applications cannot use the camera. To solve this problem, such an extended function that allows a plurality of applications to share a camera may be used depending on the operating system (OS). However, if the plurality of applications use the camera according to the extended function, the processing load increases.

In view of such circumstances, the present invention has an object of providing an information processing apparatus and a control method that achieve more efficient processing when a plurality of applications use a camera.

To solve the problem stated above, an information processing apparatus according to a first aspect of the present invention includes: a video acquisition unit configured to acquire imaging data from an imaging unit in response to processing of a first application; a first video processing unit configured to store the imaging data acquired by the video acquisition unit in a shared memory so as to be usable by processing of a second application other than the first application; and a second video processing unit configured to acquire the imaging data from the shared memory at a time interval corresponding to the second application and transmit the imaging data to the second application.

In the information processing apparatus, the second video processing unit may be configured to acquire requirement information about the time interval from the second application, and acquire the imaging data from the shared memory at the time interval based on the acquired requirement information and transmit the imaging data to the second application.

In the information processing apparatus, an association table associating identification information of each of a plurality of second applications with a corresponding time interval may be set beforehand, and the second video processing unit may be configured to acquire the imaging data from the shared memory at the time interval based on the identification information acquired from the second application and the association table, and transmit the imaging data to the second application.

In the information processing apparatus, the second video processing unit may be configured to acquire, from the second application, processed imaging data obtained by the second application performing processing on the imaging data transmitted to the second application, and store the processed imaging data in the shared memory, and the first video processing unit may be configured to acquire the processed imaging data from the shared memory and transmit the processed imaging data to the first application.

The information processing apparatus may include a plurality of second video processing units corresponding to a respective plurality of second applications, and each of the plurality of second video processing units may be configured to acquire the imaging data from the shared memory at a time interval corresponding to a corresponding second application and transmit the imaging data to the corresponding second application.

The information processing apparatus may further include a system information acquisition unit configured to acquire system information about a system situation, and the second video processing unit may be configured to further change the time interval when acquiring the imaging data from the shared memory, based on the system information acquired by the system information acquisition unit.

In the information processing apparatus, the system information may be information about communication network quality, and the second video processing unit may be configured to change the time interval when acquiring the imaging data from the shared memory to be longer than the time interval corresponding to the second application, in the case where the second video processing unit determines that the communication network quality is less than or equal to a predetermined threshold based on the system information acquired by the system information acquisition unit.

In the information processing apparatus, the system information may be information about processor utilization, and the second video processing unit may be configured to change the time interval when acquiring the imaging data from the shared memory to be longer than the time interval corresponding to the second application, in the case where the second video processing unit determines that the processor utilization is greater than or equal to a predetermined threshold based on the system information acquired by the system information acquisition unit.

In the information processing apparatus, the system information may be information about remaining capacity of a secondary battery for feeding power to the information processing apparatus, and the second video processing unit may be configured to change the time interval when acquiring the imaging data from the shared memory to be longer than the time interval corresponding to the second application, in the case where the second video processing unit determines that the remaining capacity of the secondary battery is less than or equal to a predetermined threshold based on the system information acquired by the system information acquisition unit.

The information processing apparatus may further include: a display unit configured to display video based on the imaging data; and a human detection unit configured to detect a human present on a side facing the display unit or the imaging unit, and the second video processing unit may be configured to change the time interval when acquiring the imaging data from the shared memory to be longer than the time interval corresponding to the second application, in the case where the human detection unit does not detect the human.

A control method in an information processing apparatus according to a second aspect of the present invention includes: a step in which a video acquisition unit acquires imaging data from an imaging unit in response to processing of a first application; a step in which a first video processing unit stores the imaging data acquired by the video acquisition unit in a shared memory so as to be usable by processing of a second application other than the first application; and a step in which a second video processing unit acquires the imaging data from the shared memory at a time interval corresponding to the second application and transmits the imaging data to the second application.

The above-described aspects of the present invention achieve more efficient processing when a plurality of applications use a camera.

### Brief Description of the Drawings

FIG. 1 is a perspective view illustrating the appearance of an information processing apparatus according to a first embodiment.
FIG. 2 is a schematic diagram illustrating processing using an extended function according to the first embodiment.
FIG. 3 is a block diagram illustrating an example of the hardware structure of the information processing apparatus according to the first embodiment.
FIG. 4 is a block diagram illustrating an example of a structure of function extension data processing according to the first embodiment.
FIG. 5 is a diagram illustrating a display example of processed imaging data according to the first embodiment.
FIG. 6 is a diagram illustrating an example of correspondence between application types and frame rates according to the first embodiment.
FIG. 7 is a block diagram illustrating an example of a structure of video extended function processing according to the first embodiment.
FIG. 8 is a sequence diagram illustrating a first example of video extended function processing according to the first embodiment.
FIG. 9 is a sequence diagram illustrating a second example of video extended function processing according to the first embodiment.
FIG. 10 is a block diagram illustrating an example of a structure of video extended function processing according to a second embodiment.
FIG. 11 is a block diagram illustrating an example of a structure of video extended function processing according to a third embodiment.
FIG. 12 is a diagram illustrating an example of correspondence between thresholds of CPU utilization and decrease rates of frame rate according to the third embodiment.
FIG. 13 is a flowchart illustrating an example of frame rate change processing based on CPU utilization according to the third embodiment.
FIG. 14 is a diagram illustrating an example of correspondence between thresholds of remaining battery capacity and decrease rates of frame rate according to a fourth embodiment.
FIG. 15 is a flowchart illustrating an example of frame rate change processing based on remaining battery capacity according to the fourth embodiment.
FIG. 16 is a flowchart illustrating an example of frame rate change processing based on communication network quality according to a fifth embodiment.
FIG. 17 is a block diagram illustrating an example of a structure of video extended function processing according to a sixth embodiment.
FIG. 18 is a diagram illustrating an example of correspondence between user presence/absence and decrease rates of frame rate according to the sixth embodiment.
FIG. 19 is a flowchart illustrating an example of frame rate change processing based on whether a human is present according to the sixth embodiment.

### Detailed Description of the Invention

Embodiments according to the present invention will be described below, with reference to the drawings.

### <First embodiment>

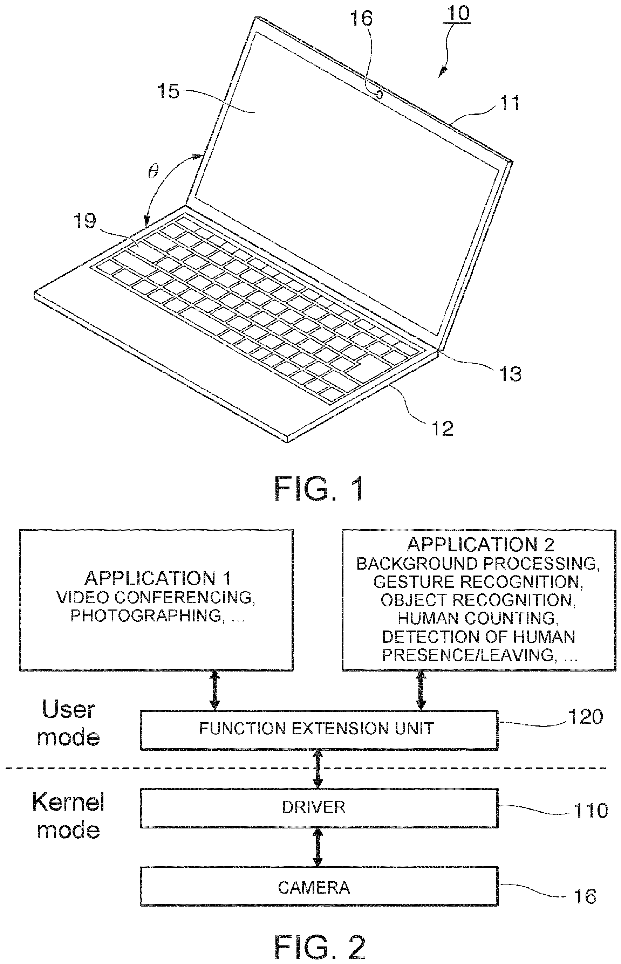

FIG. 1 is a perspective view illustrating the appearance of an information processing apparatus according to this embodiment. An information processing apparatus 10 illustrated in the drawing is a clamshell-type laptop personal computer (PC). The information processing apparatus 10 includes a first chassis 11, a second chassis 12, and a hinge mechanism 13. The first chassis 11 and the second chassis 12 are each an approximately quadrilateral plate-like (for example, flat plate-like) chassis. One side surface of the first chassis 11 and one side surface of the second chassis 12 are joined (connected) via the hinge mechanism 13, and the first chassis 11 and the second chassis 12 are relatively rotatable about a rotational axis formed by the hinge mechanism 13. A state in which the opening angle θ between the first chassis 11 and the second chassis 12 about the rotational axis is approximately 0° is a state (referred to as "closed state") in which the first chassis 11 and the second chassis 12 are folded and closed. The respective surfaces of the first chassis 11 and the second chassis 12 facing each other in the closed state are each referred to as "inner surface", and the surface opposite to the inner surface is referred to as "outer surface". The opening angle θ can also be regarded as the angle between the inner surface of the first chassis 11 and the inner surface of the second chassis 12. A state in which the first chassis 11 and the second chassis 12 are open is referred to as "open state", as opposed to the closed state. The open state is a state in which the first chassis 11 and the second chassis 12 are relatively rotated until the opening angle θ exceeds a preset threshold (for example, 10°).

A display unit 15 is provided on the inner surface of the first chassis 11. The display unit 15 displays video based on processing performed by the information processing apparatus 10. A camera 16 (an example of an imaging unit) is provided in a region of the inner surface of the first chassis 11 at the periphery of the display unit 15. That is, the camera 16 is located so as to face a user using the information processing apparatus 10.

A keyboard is provided on the inner surface of the second chassis 12, as an input unit 19. In the closed state, the display unit 15 is not visible and the keyboard is not operable. In the open state, the display unit 15 is visible and the keyboard is operable (i.e. the information processing apparatus 10 is usable). The information processing apparatus 10 can execute programs of a plurality of applications that use video captured by the camera 16.

For example, there is an application for video conferencing in which a plurality of users communicate video and audio bi-directionally using their terminal apparatuses. In the case where the user uses the video conferencing application using the information processing apparatus 10, the camera 16 captures video of the user facing the display unit 15. The information processing apparatus 10 transmits the video captured by the camera 16 via a communication network so as to be displayable by the terminal apparatus of each of the other users participating in the video conference, and also acquires video of each of the other users and displays it on the display unit 15. Each user participating in the video conference can engage in conversation while viewing the video of the other users.

Applications executable in the information processing apparatus 10 include a plurality of applications that use the camera 16. Conventionally, when one application is performing processing using imaging data of the camera 16, the other applications cannot perform processing using imaging data of the camera 16. The information processing apparatus 10 according to this embodiment applies a structure in which a plurality of applications simultaneously perform processing using imaging data of the camera 16, by using an extended function.

FIG. 2 is a schematic diagram illustrating processing using the extended function according to this embodiment. In this embodiment, imaging data captured by the camera 16 is usable by each application through a driver 110. Imaging data output from the driver 110 can only be used by one application, but a function extension unit 120 is provided to allow a plurality of applications to simultaneously use the imaging data. The function extension unit 120 performs function extension data processing of performing function extension so that the imaging data can be simultaneously used by the plurality of applications. Specifically, the function extension unit 120 copies the imaging data output from the driver 110 to a shared memory to allow the plurality of applications to access the imaging data.

As an example, the function extension unit 120 is a functional structure designed using device MFT supported as an extended function of Windows^{®}. The device MFT is executed in user mode as an extended function of the driver 110 for acquiring the imaging data of the camera 16. The camera 16 and the driver 110 are executed in kernel mode. Meanwhile, the function extension unit 120 (device MFT) and the applications are executed in user mode. The structure of function extension data processing using the function extension unit 120 will be described in detail later.

With such a structure, applications 1 and 2 can simultaneously perform processing using the imaging data of the camera 16. For example, the application 1 is an application for video conferencing, photographing, and the like, and the application 2 is an application for image processing such as background processing (for example, background blurring) or skin quality correction of imaging data, an application for recognition processing for gestures, objects, etc., or an application for detection processing such as counting humans or detecting the presence or leaving of humans.

For example, by simultaneously executing the application for video conferencing and the application for background processing, the information processing apparatus 10 can blur a background part of the video of the user for video conferencing. For example, by simultaneously executing the application for video conferencing and the application for gesture recognition, the information processing apparatus 10 can receive operation input using gestures while conducting a video conference. For example, by simultaneously executing the application for video conferencing and the application for detection of the leaving of humans, the information processing apparatus 10 can detect whether a user has left during a video conference.

As a result of the plurality of applications being allowed to use the imaging data of the camera 16 simultaneously in this way, it is possible to simultaneously achieve functions that cannot be executed by one application, or compensate for a missing function by another application. However, when the plurality of applications simultaneously perform processing using the imaging data of the camera 16, the processing load of the information processing apparatus 10 may increase. Accordingly, the information processing apparatus 10 changes the frame rate of the imaging data of the camera 16 depending on the application. The frame rate is the number of frames per second, and correlates with the frame time interval. When the frame rate is higher, the frame time interval is shorter. When the frame rate is lower, the frame time interval is longer. A shorter frame time interval causes a greater processing load.

For example, the information processing apparatus 10 performs processing using imaging data of high frame rate in the case of an application that requires high frame rate, and decreases the frame rate to reduce the processing load in the case of an application that does not require high frame rate. Thus, the information processing apparatus 10 performs control so as to use imaging data at a frame rate corresponding to each application, thereby achieving more efficient processing when a plurality of applications use the camera 16. The structure of the information processing apparatus 10 according to this embodiment will be described in detail below.

### (Structure of information processing apparatus 10)

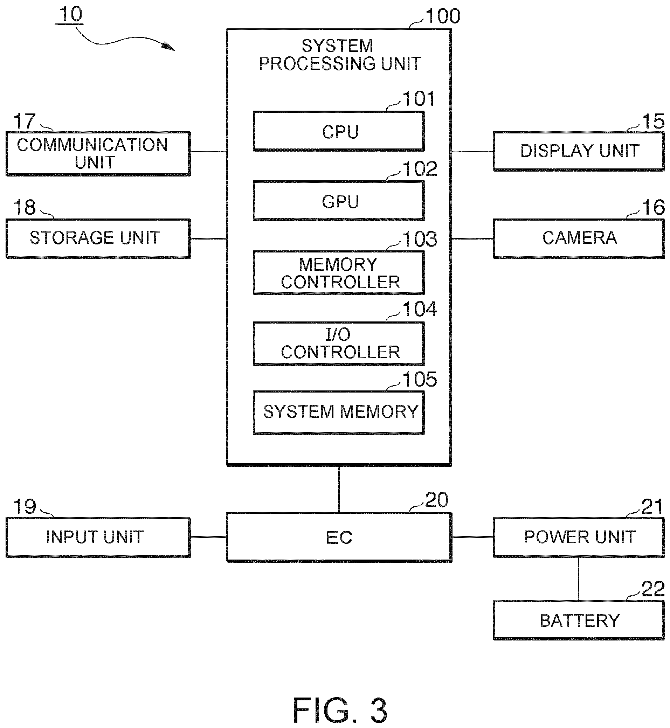

FIG. 3 is a block diagram illustrating an example of the hardware structure of the information processing apparatus 10 according to this embodiment. In the drawing, the components corresponding to the parts illustrated in FIG. 1 are given the same symbols. The information processing apparatus 10 illustrated in the drawing includes the display unit 15, the camera 16, a communication unit 17, a storage unit 18, the input unit 19, an embedded controller (EC) 20, a power unit 21, a battery 22, and a system processing unit 100.

The display unit 15 includes a liquid crystal display (LCD), an organic electroluminescence (EL) display, or the like. The display unit 15 displays video based on display data under control of the system processing unit 100. The display data includes, for example, image and text data generated by processing of an OS or processing of an application running on the OS. For example, the display unit 15 displays video based on imaging data of the camera 16, video based on imaging data (hereafter referred to as "processed imaging data") obtained by performing image processing on the imaging data, or the like, based on processing of an application.

The camera 16 includes a lens and an imaging element (not illustrated), and captures a subject image input via the lens, changes the subject image into an electrical signal, and outputs the resultant imaging data. For example, the camera 16 captures a predetermined range (angle of view) in a direction facing the inner surface of the first chassis 11 at a predetermined time interval, and outputs the captured imaging data to the system processing unit 100. The predetermined time interval corresponds to, for example, the frame rate of imaging data.

The communication unit 17 is communicably connected to other apparatuses via a wireless or wired communication network, and performs transmission and reception of various data. For example, the communication unit 170 includes a wired LAN interface such as Ethernet^{®} or a wireless LAN interface such as Wi-Fi^{®}.

The storage unit 18 includes a storage medium such as a hard disk drive (HDD), a solid state drive (SSD), a random access memory (RAM), or a read only memory (ROM). For example, the storage unit 18 stores programs such as an OS, various drivers, various services/utilities, and applications, and various data.

The input unit 19 receives input from the user, and includes, for example, a keyboard as illustrated in FIG. 1. The input unit 19, in response to receiving operation on the keyboard by the user, outputs an operation signal corresponding to the operation of the user to the EC 20. The input unit 19 may include a touch panel, a touch pad, or the like, instead of or in addition to the keyboard. The input unit 19 may be connected to an external operation device such as a mouse or an external keyboard wiredly or wirelessly, and receive operation on the connected external operation device by the user.

The EC 20 is a one-chip microcomputer that monitors and controls various devices (e.g. peripherals and sensors) regardless of the system state of the OS. The EC 20 includes a central processing unit (CPU), a RAM, and a ROM, and also includes A/D input terminals, D/A output terminals, timers, and digital input and output terminals of a plurality of channels. The input unit 19, the power unit 21, and the like are connected to the EC 20 via these input and output terminals. The EC 20 performs reception and transmission of various signals with the connected units.

For example, the EC 20 acquires an operation signal output from the input unit 19, and performs processing based on the acquired operation signal. The EC 20 outputs the acquired operation signal to the system processing unit 100 in the case where the acquired operation signal relates to processing by the system processing unit 100. The EC 20 also controls the power unit 21 depending on, for example, the system state of the OS. For example, the EC 20 outputs a control signal for controlling power supply according to the system state or the like, to the power unit 21. The EC 20 also communicates with the power unit 21 to acquire information of the state (such as remaining capacity) of the battery 22 from the power unit 21.

The power unit 21 includes, for example, a DC/DC converter and a charge and discharge circuit for controlling charge and discharge of the battery 22. The power unit 21 converts DC power supplied from the battery 22 or DC power supplied from an external power source (e.g. AC adapter) (not illustrated) into a plurality of voltages necessary for operating each part of the information processing apparatus 10. The power unit 21 supplies power to each part of the information processing apparatus 10 under control of the EC 20.

The battery 22 is a secondary battery for supplying power to each part of the information processing apparatus 10 when power is not supplied from the external power source (e.g. AC adapter). When power is being supplied from the external power source (e.g. AC adapter), the battery 22 is charged with the power to full capacity via the power unit 21. When power is not being supplied from the external power source (e.g. AC adapter), the power in the battery 22 is discharged and supplied to each part of the information processing apparatus 10 via the power unit 21.

The system processing unit 100 includes a CPU 101, a graphic processing unit (GPU) 102, a memory controller 103, an input-output (I/O) controller 104, and a system memory 105. The CPU 101 and the GPU 102 are also collectively referred to as "processor".

The CPU 101 performs processing by programs such as an OS, various drivers, various services/utilities, and applications. The GPU 102 is connected to the display unit 15. The GPU 102 performs image processing to generate display data under control of the CPU 101. The GPU 102 outputs the generated display data to the display unit 15. The CPU 101 and the GPU 102 may be integrally formed as one core, or formed as separate cores to share the load. The number of processors is not limited to one, and may be two or more.

The memory controller 103 controls reading and writing of data from and to the system memory 105, the storage unit 18, and the like by the processing of the CPU 101 and the GPU 102.

The I/O controller 104 controls input and output of data to and from the display unit 15, the camera 16, the communication unit 17, the EC 20, and the like.

The system memory 105 is a rewritable memory used as a read region for programs executed by processors such as the CPU 101 and the GPU 102 or a work region in which processing data of the programs is written. For example, the system memory 105 includes a plurality of dynamic random access memory (DRAM) chips. The programs include an OS, various drivers for controlling peripherals, various services/utilities, and applications.

### (Structure of function extension data processing)

A structure of function extension data processing for function extension to allow simultaneous use of imaging data of the camera 16 by a plurality of applications will be described in detail below.

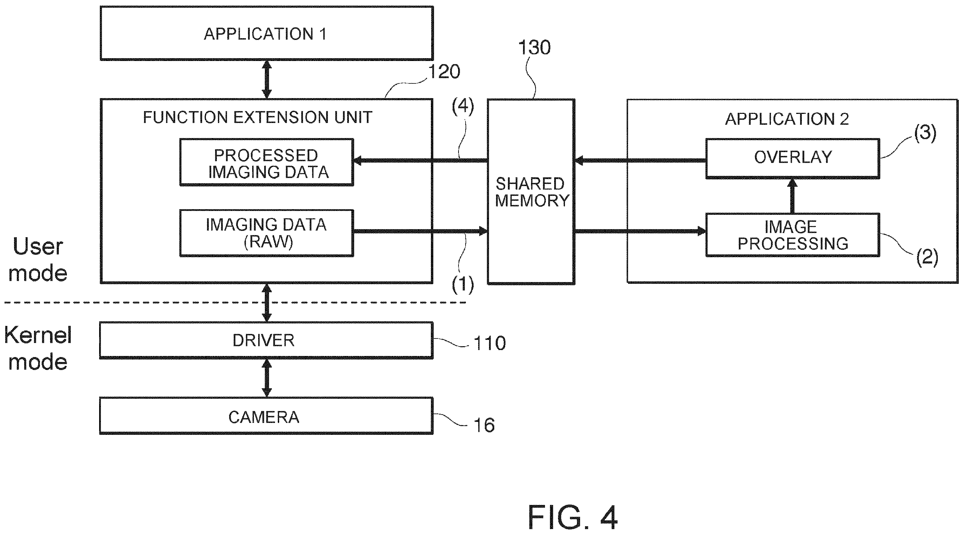

FIG. 4 is a block diagram illustrating an example of the structure of function extension data processing according to this embodiment. In the drawing, the components corresponding to the parts illustrated in FIG. 2 are given the same symbols. The function extension unit 120 acquires each raw frame of imaging data captured by the camera 16, via the driver 110. The driver 110 is software for making the camera 16 controllable by an OS. The driver 110 and the function extension unit 120 are each a functional structure realized by the CPU 101 executing the corresponding program.

In the case where only the application 1 uses imaging data of the camera 16, the function extension unit 120 outputs each raw frame of imaging data acquired from the camera 16 to the application 1. This is processing in which the function extension unit 120 outputs the acquired raw frame of imaging data directly to the application 1 while bypassing other processing. For example, suppose the application 1 is an application for video conferencing. The raw frame of imaging data acquired by the function extension unit 120 is streamed directly to the application 1 while bypassing other processing.

The following (1) to (4) represent processing in the case where the applications 1 and 2 simultaneously use imaging data of the camera 16.
(1) The function extension unit 120 stores each raw frame of imaging data acquired from the camera 16 via the driver 110, in a shared memory 130 so as to be usable by the processing of the application 2. For example, the function extension unit 120 copies and writes each raw frame of imaging data acquired from the camera 16 via the driver 110, to the shared memory 130. The shared memory 130 is, for example, set in the system memory 105. After copying the imaging data to the shared memory 130, the function extension unit 120 waits for a processing result of the application 2.
(2) The application 2 reads each raw frame of imaging data from the shared memory 130 and performs processing, by the processing of the OS. For example, in the case where the application 2 is an application for image processing such as background processing, the application 2 performs preset image processing, image processing selected by the user, or the like. Background blurring processing is used as an example here. The application 2 detects a background region from the raw frame of imaging data, and performs blurring processing on the detected background region.
(3) The application 2 generates a frame of processed imaging data by overlaying, on the raw frame of imaging data, data obtained by performing blurring processing on the background region. The application 2 writes the generated frame of processed imaging data to the shared memory 130.
(4) When the frame of processed imaging data is input from the shared memory 130 as the processing result of the application 2, the function extension unit 120 writes the frame of processed imaging data to a frame buffer in the function extension unit 120. In the case where the function extension unit 120 acquires the frame of processed imaging data, the frame of processed imaging data is streamed to the application 1.

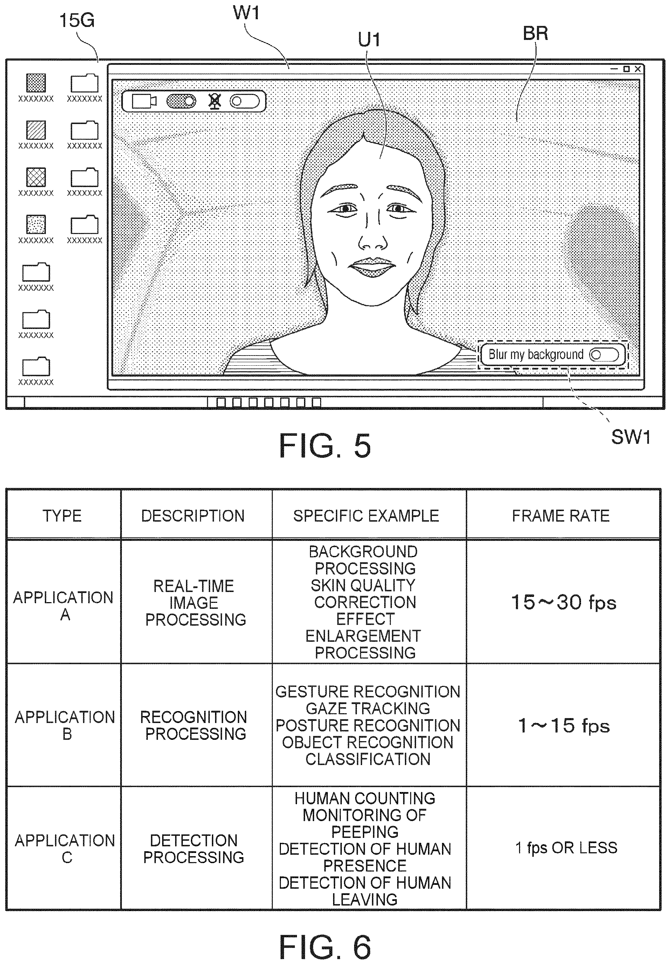

FIG. 5 is a diagram illustrating a display example of processed imaging data streamed to the application 1. The drawing illustrates an example in which a window W1 of the application 1 for video conferencing is displayed as an active window on a display screen 15G of the display unit 15. In this example, video of a user U1 conducting a video conference using the information processing apparatus 10 is displayed in the window W1. The video is based on processed imaging data obtained by performing blurring processing on a background region BR. Background blurring processing is processing not by the application 1 but by the application 2. A switch SW1 illustrated in FIG. 5 is an operation switch for selectively enabling or disabling background blurring processing as a function of the application 1. In this example, background blurring processing as a function of the application 1 is disabled.

In the case where the application 2 is an application that performs not image processing on imaging data streamed in the application 1 but recognition processing for gestures, objects, etc. or detection processing such as counting humans or detecting the presence or leaving of humans, the processed imaging data need not be returned to the shared memory 130. In this case, the processes (1) and (2) in FIG. 4 are performed, while omitting the processes (3) and (4). In (2), the application 2 performs processing of the function of the application 2, instead of image processing. Each raw frame of imaging data acquired by the function extension unit 120 is directly streamed to the application 1 while bypassing other processing.

Thus, the information processing apparatus 10 uses the extended function to allow the plurality of applications to simultaneously perform processing using the imaging data of the camera 16. This, however, may cause an increase in processing load, as mentioned earlier. The information processing apparatus 10 therefore changes the frame rate of the imaging data of the camera 16 depending on the application. For example, the information processing apparatus 10 changes the frame rate depending on the application type.

FIG. 6 is a diagram illustrating an example of correspondence between application types and frame rates. An application type is, for example, a type into which an application is classified by a frame rate necessary for achieving the function of the application. In the illustrated example, there are three types of application A, application B, and application C.

An application classified as application A is an application that needs to perform image processing on the imaging data of the camera 16 in real time. Examples of application A include applications for subjecting the imaging data to background processing, human face skin quality correction, video effect addition processing, and enlargement processing. A frame rate necessary for the application classified as application A is, for example, 15 frames per second (fps) to 30 fps.

An application classified as application B is an application that performs recognition processing using the imaging data of the camera 16. Examples of application B include applications for performing processing of recognizing human gestures from the imaging data, gaze tracking processing, processing of recognizing human postures or objects, and processing of classifying targets. A frame rate necessary for the application classified as application B is, for example, 1 fps to 15 fps, as real time performance is not required as compared with application A.

An application classified as application C is an application that performs detection processing using the imaging data of the camera 16. Examples of application C include applications for performing processing of detecting humans from the imaging data and counting the number of humans, processing of monitoring someone looking over the shoulder of the user using the information processing apparatus 10, and processing of detecting the presence or leaving of humans. A frame rate necessary for the application classified as application C is, for example, 1 fps or less, as real time performance is not required as compared with application B.

For example, the application 2, upon start, outputs requirement information about the frame rate necessary for the application 2. The information processing apparatus 10 transmits imaging data to the application 2 at the frame rate based on the requirement information. Specifically, the information processing apparatus 10 has a structure of video extended function processing in which a video setting processing unit that sets, for each application, the frame rate of imaging data transmitted to the application 2 is added to the structure of function extension data processing illustrated in FIG. 4.

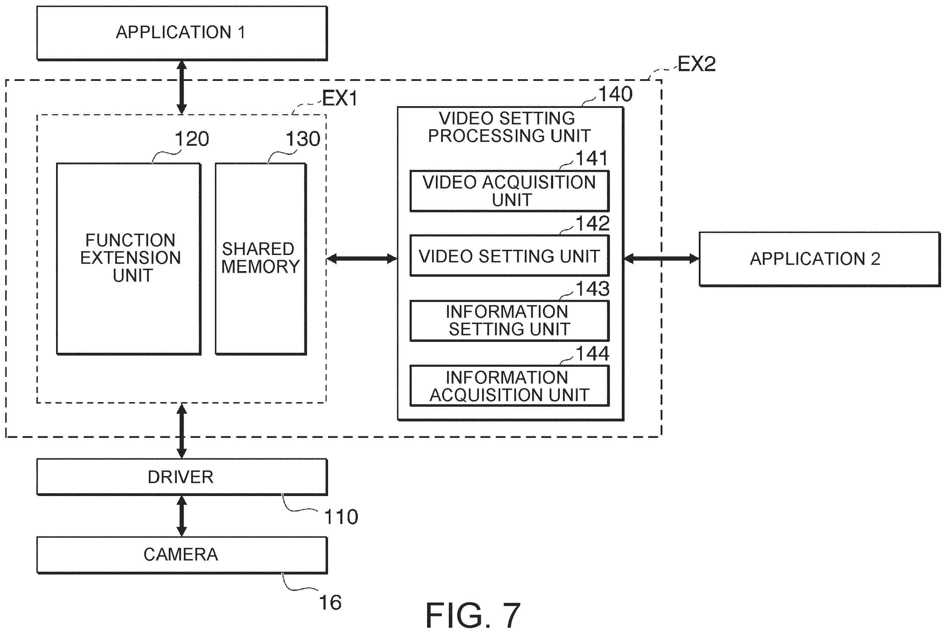

FIG. 7 is a block diagram illustrating an example of the structure of video extended function processing according to this embodiment. In the drawing, the components corresponding to the parts illustrated in FIG. 4 are given the same symbols. The structure of function extension data processing designated by symbol EX1 is a structure including the function extension unit 120 and the shared memory 130 illustrated in FIG. 4. A video setting processing unit 140 is added to this structure of function extension data processing to form the structure of video extended function processing designated by symbol EX2. The video setting processing unit 140 acquires imaging data from the shared memory 130 at a frame rate corresponding to the application 2, and transmits the imaging data to the application 2. That is, the video setting processing unit 140 is provided between the shared memory 130 and the application 2, thus enabling, for example, setting the frame rate for each application. The structure of the video setting processing unit 140 will be described in detail below.

The video setting processing unit 140 can be provided, for example, as a library. The video setting processing unit 140 includes a video acquisition unit 141, a video setting unit 142, an information setting unit 143, and an information acquisition unit 144, as functional structures realized by calling and executing the library.

The video acquisition unit 141 acquires imaging data from the shared memory 130 at a frame rate set by the information setting unit 143, and transmits the imaging data to the application 2.

The video setting unit 142 writes processed imaging data obtained as a result of the processing of the application 2, to the shared memory 130.

The information setting unit 143 acquires requirement information about the frame rate from the application 2, and sets the frame rate based on the requirement information.

The information acquisition unit 144 acquires information of imaging data acquired from the shared memory 130, and transmits the information to the application 2. The information of the imaging data includes, for example, data format and resolution.

### (Operation of video extended function processing)

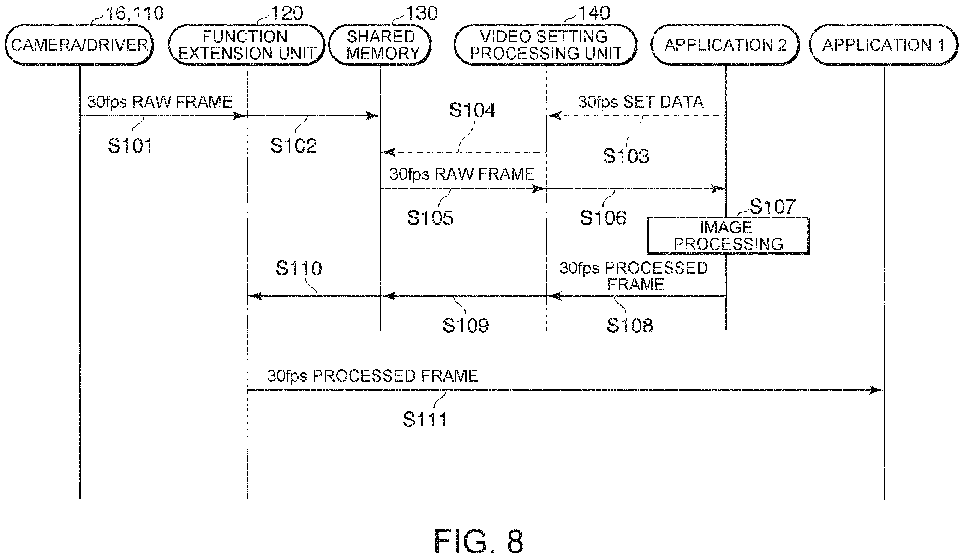

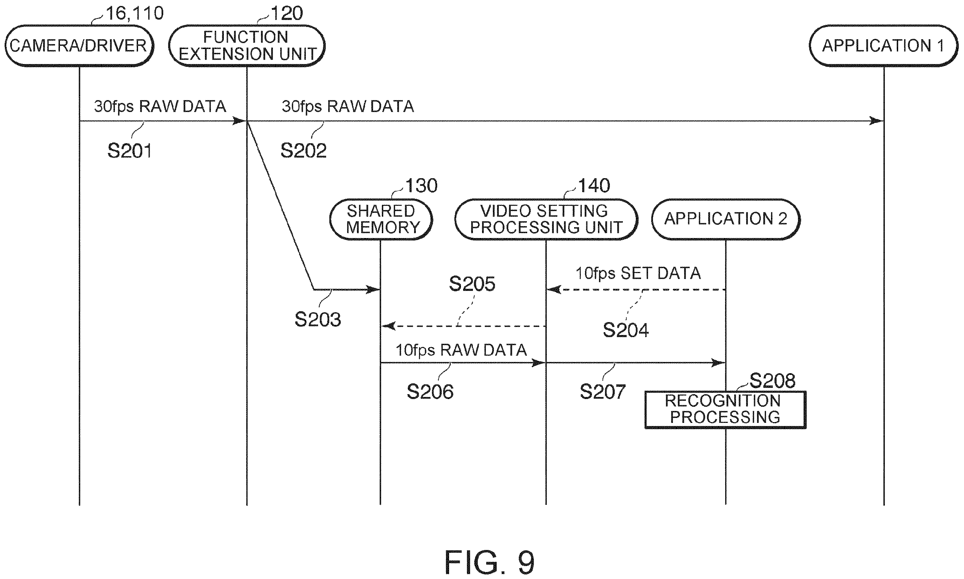

Operation of video extended function processing in the information processing apparatus 10 will be described below, with reference to FIGS. 8 and 9.

FIG. 8 is a sequence diagram illustrating a first example of video extended function processing according to this embodiment. The video extended function processing illustrated in the drawing is an example in which the type of the application 2 is application A illustrated in FIG. 6 and processed imaging data obtained as a result of the application 2 performing image processing in real time is used in the application 1. It is assumed here that the application 2 performs image processing on imaging data of a frame rate of 30 fps.

(Step S101) The camera 16 transmits each raw frame of imaging data captured at 30 fps to the function extension unit 120 via the driver 110. The function extension unit 120 acquires each raw frame of imaging data from the driver 110.

(Step S102) Each time the function extension unit 120 acquires a raw frame of imaging data of 30 fps from the camera 16 via the driver 110, the function extension unit 120 copies and writes the raw frame of imaging data to the shared memory 130.

(Step S103) The application 2, upon start, transmits requirement information about the frame rate to the video setting processing unit 140. For example, the application 2 transmits requirement information indicating requirement of 30 fps as a necessary frame rate, to the video setting processing unit 140.

(Step S104) The video setting processing unit 140 sets the frame rate to 30 fps based on the requirement information acquired from the application 2, and reads each raw frame of imaging data from the shared memory 130 at the set frame rate of 30 fps.

(Step S105) The video setting processing unit 140 acquires each raw frame of imaging data from the shared memory 130 at the frame rate of 30 fps.

(Step S106) Each time the video setting processing unit 140 acquires a raw frame of imaging data from the shared memory 130, the video setting processing unit 140 transmits the raw frame of imaging data to the application 2.

(Step S107) The application 2 performs image processing on the raw frame of imaging data acquired from the video setting processing unit 140. For example, each time the application 2 acquires a raw frame of imaging data from the video setting processing unit 140 at 30 fps, the application 2 performs image processing to generate a frame of processed imaging data.

(Step S108) The application 2 transmits the generated frame of processed imaging data to the video setting processing unit 140 at a frame rate of 30 fps.

(Step S109) Each time the video setting processing unit 140 acquires a frame of processed imaging data transmitted from the application 2, the video setting processing unit 140 writes the frame of processed imaging data to the shared memory 130.

(Step S110) The function extension unit 120 acquires each frame of processed imaging data from the shared memory 130 at a frame rate of 30 fps.

(Step Sill) The function extension unit 120 transmits the acquired frame of processed imaging data to the application 1 at a frame rate of 30 fps.

FIG. 9 is a sequence diagram illustrating a second example of video extended function processing according to this embodiment. The video extended function processing illustrated in the drawing is an example in which the type of the application 2 is application B or application C illustrated in FIG. 6 and the processing of the application 2 does not influence imaging data used in the application 1. It is assumed here that the application 2 performs recognition processing for gestures or the like using imaging data of a frame rate of 10 fps.

(Step S201) The camera 16 transmits each raw frame of imaging data captured at 30 fps to the function extension unit 120 via the driver 110. The function extension unit 120 acquires each raw frame of imaging data from the driver 110.

(Step S202) The function extension unit 120 transmits each raw frame of imaging data of 30 fps acquired from the camera 16 via the driver 110, directly to the application 1.

(Step S203) Each time the function extension unit 120 acquires a raw frame of imaging data of 30 fps from the camera 16 via the driver 110, the function extension unit 120 copies and writes the raw frame of imaging data to the shared memory 130.

(Step S204) The application 2, upon start, transmits requirement information about the frame rate to the video setting processing unit 140. For example, the application 2 transmits requirement information indicating requirement of 10 fps as a necessary frame rate, to the video setting processing unit 140.

(Step S205) The video setting processing unit 140 sets the frame rate to 10 fps based on the requirement information acquired from the application 2, and reads each raw frame of imaging data from the shared memory 130 at the set frame rate of 10 fps.

(Step S206) The video setting processing unit 140 acquires each raw frame of imaging data from the shared memory 130 at the frame rate of 10 fps.

(Step S207) Each time the video setting processing unit 140 acquires a raw frame of imaging data from the shared memory 130, the video setting processing unit 140 transmits the raw frame of imaging data to the application 2.

(Step S208) The application 2 performs recognition processing for gestures or the like using each raw frame of imaging data acquired from the video setting processing unit 140. For example, each time the application 2 acquires a raw frame of imaging data from the video setting processing unit 140 at 10 fps, the application 2 performs recognition processing and outputs a recognition result.

As described above, the information processing apparatus 10 according to this embodiment includes the driver 110 (an example of a video acquisition unit), the function extension unit 120 (an example of a first video processing unit), and the video setting processing unit 140 (an example of a second video processing unit). The driver 110 acquires imaging data from the camera 16 (an example of an imaging unit) in response to processing of the application 1 (first application). The function extension unit 120 stores the imaging data acquired by the driver 110 so as to be usable by processing of the application 2 (second application) other than the application 1. The video setting processing unit 140 acquires the imaging data from the shared memory 130 at a frame rate corresponding to the application 2 and transmits the imaging data to the application 2. That is, the video setting processing unit 140 acquires the imaging data from the shared memory 130 at a time interval corresponding to the application 2 and transmits the imaging data to the application 2.

In this way, when a plurality of applications use the camera 16, the information processing apparatus 10 can reduce the processing load by optimizing the frame rate for each application. Hence, according to this embodiment, it is possible to achieve more efficient processing when a plurality of applications use the camera 16.

For example, the video setting processing unit 140 acquires requirement information about the frame rate (an example of the foregoing time interval) from the application 2, and acquires the imaging data from the shared memory 130 at the frame rate based on the acquired requirement information and transmits the imaging data to the application 2.

In this way, when a plurality of applications use the camera 16, the information processing apparatus 10 can set, for each application, the frame rate necessary for the application. Thus, when a plurality of applications use the camera 16, the information processing apparatus 10 can decrease the frame rate of imaging data transmitted to an application that does not require high frame rate, and thus can reduce the processing load.

The video setting processing unit 140 may determine the frame rate based on, for example, identification information of the application 2, instead of receiving the requirement information about the frame rate from the application 2. For example, an association table associating identification information of each of a plurality of applications 2 with a frame rate (an example of the foregoing time interval) may be set beforehand. In this case, the video setting processing unit 140 acquires the imaging data from the shared memory 130 at the frame rate based on the identification information acquired from the application 2 and the association table, and transmits the imaging data to the application 2.

In this way, when a plurality of applications use the camera 16, the information processing apparatus 10 can set, for each application, the frame rate necessary for the application. For example, with the provision of the association table, the information processing apparatus 10 can set, even for an application that does not support output of frame rate requirement information, the frame rate necessary for the application. Thus, when a plurality of applications use the camera 16, the information processing apparatus 10 can decrease the frame rate of imaging data transmitted to an application that does not require high frame rate, and thus can reduce the processing load.

The video setting processing unit 140 acquires, from the application 2, processed imaging data obtained by the application 2 performing processing on the imaging data transmitted to the application 2, and stores the processed imaging data in the shared memory 130. The function extension unit 120 then acquires the processed imaging data from the shared memory 130 and transmits the processed imaging data to the application 1.

In this way, the information processing apparatus 10 can reflect, in the imaging data of the camera 16 used by the application 1, the processing of the application 2 (application other than the application 1) in real time.

A control method in the information processing apparatus 10 according to this embodiment includes: a step in which the driver 110 acquires imaging data from the camera 16 (an example of an imaging unit) in response to processing of the application 1 (first application); a step in which the function extension unit 120 stores the imaging data acquired by the driver 110 in the shared memory 130 so as to be usable by processing of the application 2 (second application) other than the application 1; and a step in which the video setting processing unit 140 acquires the imaging data from the shared memory 130 at a frame rate corresponding to the application 2 and transmits the imaging data to the application 2. That is, the video setting processing unit 140 acquires the imaging data from the shared memory 130 at a time interval corresponding to the application 2 and transmits the imaging data to the application 2.

In this way, when a plurality of applications use the camera 16, the control method in the information processing apparatus 10 can reduce the processing load by optimizing the frame rate for each application. Hence, according to this embodiment, it is possible to achieve more efficient processing when a plurality of applications use the camera 16.

### <Second embodiment>

A second embodiment of the present invention will be described below.

The first embodiment describes an example in which two applications, i.e. an application 1 and an application 2, simultaneously use imaging data of the camera 16. Alternatively, an application 1 and a plurality of applications 2 may simultaneously use imaging data of the camera 16. This embodiment describes the case where there are a plurality of applications 2. The basic structure of the information processing apparatus 10 is the same as the structure illustrated in FIGS. 1 and 3.

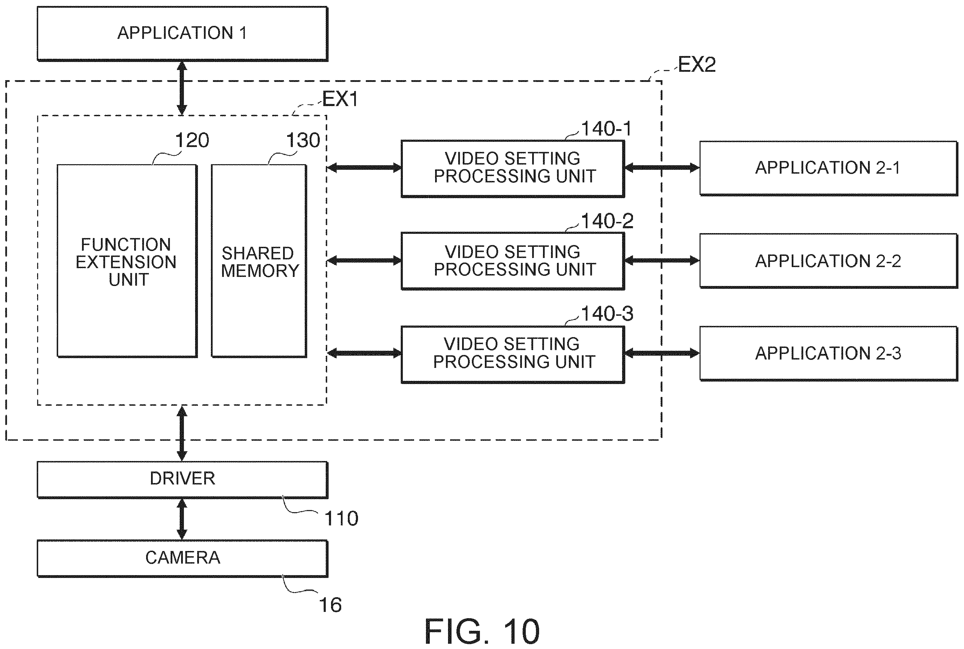

FIG. 10 is a block diagram illustrating an example of a structure of video extended function processing according to this embodiment. In the drawing, the components corresponding to the parts illustrated in FIG. 7 are given the same symbols. FIG. 10 illustrates an example in which three applications 2 are started and simultaneously use imaging data of the camera 16. The structure of video extended function processing designated by symbol EX2 includes three video setting processing units 140 corresponding to the respective three applications 2, thus allowing simultaneous use of imaging data of the camera 16. That is, the number of applications 2 can be increased by the increase of the number of video setting processing units 140.

In the illustrated example, the structure of video extended function processing designated by symbol EX2 includes a video setting processing unit 140-1 for an application 2-1, a video setting processing unit 140-2 for an application 2-2, and a video setting processing unit 140-3 for an application 2-3. The application 2-1 is, for example, classified as application A illustrated in FIG. 6. The application 2-2 is, for example, classified as application B illustrated in FIG. 6. The application 2-3 is, for example, classified as application C illustrated in FIG. 6. The video setting processing units 140-1, 140-2, and 140-3 each perform the same processing as the video setting processing unit 140 described in the first embodiment. Hence, the application 1 and the applications 2-1, 2-2, and 2-3 can simultaneously use imaging data of the camera 16.

As described above, the information processing apparatus 10 according to this embodiment includes the plurality of video setting processing units 140 (for example, 140-1, 140-2, and 140-3) corresponding to the respective plurality of applications 2 (for example, 2-1, 2-2, and 2-3). Each of the plurality of video setting processing units 140 acquires imaging data from the shared memory 130 at a frame rate corresponding to the corresponding application 2 and transmit the imaging data to the corresponding application 2. That is, the plurality of video setting processing units 140 each acquire imaging data from the shared memory 130 at the time interval corresponding to the corresponding application 2 and transmit the imaging data to the application 2.

In this way, when three or more applications use the camera 16, the information processing apparatus 10 can optimize the frame rate for each application. Hence, according to this embodiment, it is possible to achieve more efficient processing when a plurality of applications use the camera 16.

### <Third embodiment>

A third embodiment of the present invention will be described below.

This embodiment describes an example of a structure in which the frame rate is further changed depending on the situation of the system. For example, the situation of the system is processor utilization. Even in the case where, when a plurality of applications simultaneously use the camera 16, the frame rate is set depending on the application to achieve more efficient processing as described in the first and second embodiments, there is a possibility that the processor utilization is greater than or equal to a predetermined threshold. In such a case, the information processing apparatus 10 further decreases the frame rate of the application 2. The basic structure of the information processing apparatus 10 is the same as the structure illustrated in FIGS. 1 and 3.

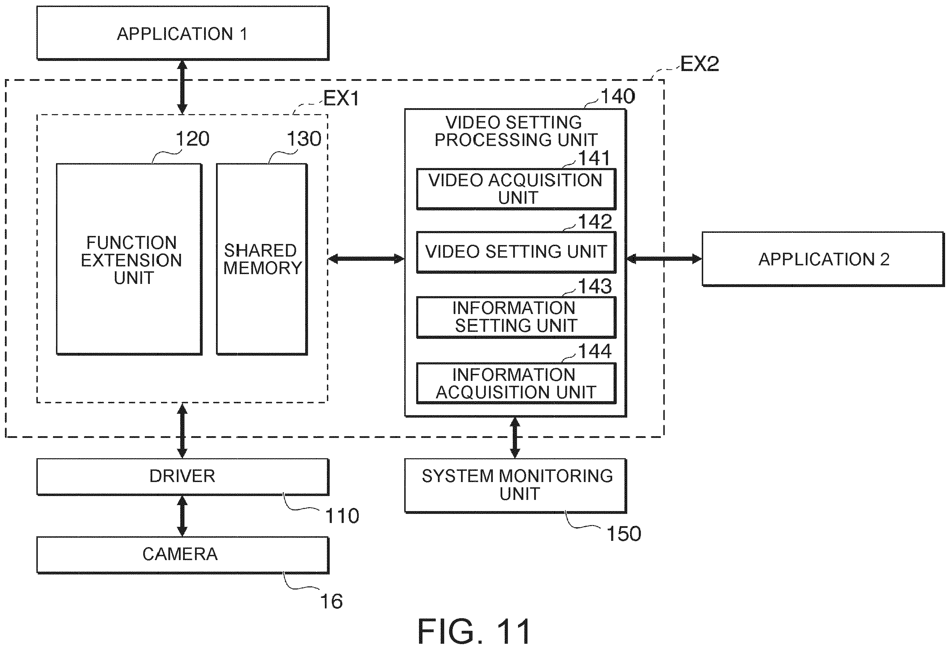

FIG. 11 is a block diagram illustrating an example of a structure of video extended function processing according to this embodiment. In the drawing, the components corresponding to the parts illustrated in FIG. 7 are given the same symbols. The example illustrated in FIG. 11 differs from the structure illustrated in FIG. 7 in that the structure of video extended function processing designated by symbol EX2 includes a system monitoring unit 150.

The system monitoring unit 150 acquires system information about the situation of the system. For example, the system monitoring unit 150 acquires information about the processor utilization from the CPU 101, as the system information about the situation of the system. Examples of the processor utilization include CPU utilization, GPU utilization, and visual processing unit (VPU) utilization.

The video setting processing unit 140 acquires the system information from the system monitoring unit 150, and further changes the frame rate when acquiring imaging data from the shared memory 130 based on the processor utilization included in the acquired system information and transmits the imaging data to the application 2. Although FIG. 11 illustrates an example in which there is one application 2, the structure is equally applicable to the case where there are a plurality of applications 2 by adding the system monitoring unit 150 to the structure illustrated in FIG. 10. In such a case, each of the plurality of video setting processing units 140 further changes the frame rate of imaging data transmitted to the corresponding application 2 based on the system information acquired by the system monitoring unit 150. The following will describe processing of changing the frame rate depending on the CPU utilization as an example of the processor utilization.

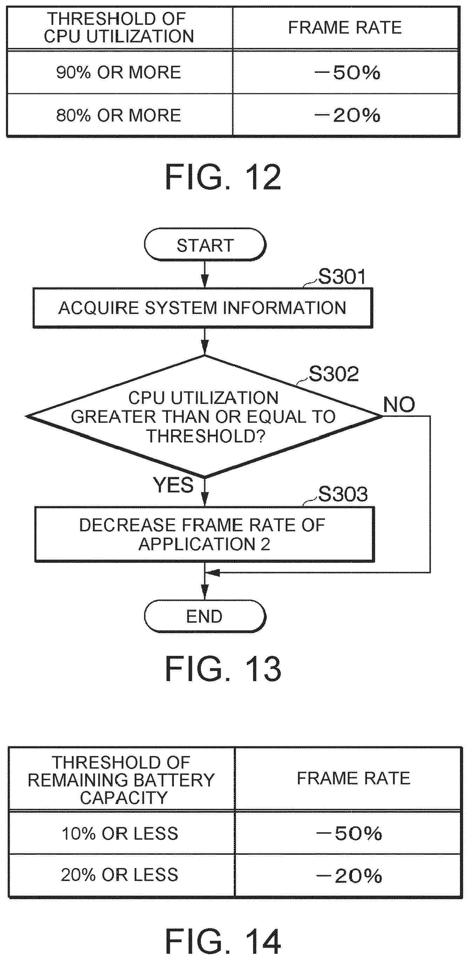

FIG. 12 is a diagram illustrating an example of correspondence between thresholds of CPU utilization and decrease rates of frame rate. The illustrated example indicates that the frame rate is decreased by 20% ("-20%") in the case where the CPU utilization is 80% or more, and decreased by 50% ("-50%") in the case where the CPU utilization is 90% or more. The thresholds of CPU utilization and the decrease rates of frame rate illustrated in the drawing are an example, and the present invention is not limited to such.

FIG. 13 is a flowchart illustrating an example of frame rate change processing based on CPU utilization according to this embodiment.

(Step S301) The video setting processing unit 140 acquires system information from the system monitoring unit 150.

(Step S302) The video setting processing unit 140 determines whether the CPU utilization included in the system information acquired in step S301 is greater than or equal to a predetermined threshold. In the case where the video setting processing unit 140 determines that the CPU utilization is greater than or equal to the predetermined threshold (YES), the video setting processing unit 140 advances to the process in step S303. In the case where the video setting processing unit 140 determines that the CPU utilization is less than the predetermined threshold (NO), the video setting processing unit 140 does not perform the process in step S303.

(Step S303) The video setting processing unit 140 decreases the frame rate of imaging data transmitted to the application 2. For example, in the case where the video setting processing unit 140 determines that the CPU utilization is 80% or more in step S302, the video setting processing unit 140 decreases the frame rate by 20%. For example, in the case where the video setting processing unit 140 determines that the CPU utilization is 90% or more in step S302, the video setting processing unit 140 decreases the frame rate by 50%.

Specifically, suppose the frame rate of imaging data transmitted to the application 2 is 30 fps. In such a case, the video setting processing unit 140 changes the frame rate from 30 fps to 24 fps if the CPU utilization is 80% or more, and changes the frame rate from 30 fps to 15 fps if the CPU utilization is 90% or more.

In the case where there are a plurality of applications 2, for example, each of the video setting processing units 140 uniformly changes the frame rate of imaging data transmitted to the corresponding application 2 based on the CPU utilization. A structure in which the system monitoring unit 150 is added to the structure illustrated in FIG. 10 is used as an example below. Suppose the frame rate of the application 2-1 is 30 fps, the frame rate of the application 2-2 is 10 fps, and the frame rate of the application 2-3 is 1 fps. In such a case, the video setting processing unit 140-1 changes the frame rate of the application 2-1 to 24 fps if the CPU utilization is 80% or more, and to 15 fps if the CPU utilization is 90% or more. The video setting processing unit 140-2 changes the frame rate of the application 2-2 to 8 fps if the CPU utilization is 80% or more, and to 5 fps if the CPU utilization is 90% or more. The video setting processing unit 140-3 changes the frame rate of the application 2-3 to 0.8 fps if the CPU utilization is 80% or more, and to 0.5 fps if the CPU utilization is 90% or more.

As described above, the information processing apparatus 10 according to this embodiment further includes the system monitoring unit 150 (an example of a system information acquisition unit) that acquires system information about a system situation. The video setting processing unit 140 further changes the frame rate when acquiring the imaging data from the shared memory 130, based on the system information acquired by the system monitoring unit 150. That is, the video setting processing unit 140 further changes the time interval when acquiring the imaging data from the shared memory 130, based on the system information acquired by the system monitoring unit 150.

In this way, when a plurality of applications use the camera 16, the information processing apparatus 10 can further reduce the processing load depending on the system situation. Hence, according to this embodiment, it is possible to achieve more efficient processing when a plurality of applications use the camera 16.

For example, the system information is information about processor utilization. In the case where the video setting processing unit 140 determines that the processor utilization (for example, CPU utilization) is greater than or equal to a predetermined threshold based on the system information acquired by the system monitoring unit 150, the video setting processing unit 140 decreases the frame rate when acquiring the imaging data from the shared memory 130 to be lower than the frame rate corresponding to the application 2. That is, in the case where the video setting processing unit 140 determines that the processor utilization (for example, CPU utilization) is greater than or equal to the predetermined threshold based on the system information acquired by the system monitoring unit 150, the video setting processing unit 140 changes the time interval when acquiring the imaging data from the shared memory 130 to be longer than the time interval corresponding to the application 2.

In this way, when a plurality of applications use the camera 16, the information processing apparatus 10 can further reduce the processing load and reduce the processor utilization in the case where the processor utilization increases.

### <Fourth embodiment>

A fourth embodiment of the present invention will be described below.

This embodiment describes a structure in which the frame rate is further changed depending on the situation of the system as in the third embodiment but the situation of the system is the remaining capacity of the battery 22. When the remaining capacity of the battery 22 decreases, the power consumption needs to be reduced in order to maintain the power feeding state. An effective way for this is to decrease the frame rate. Accordingly, in the case where the remaining capacity of the battery 22 is less than or equal to a predetermined threshold, the information processing apparatus 10 further decreases the frame rate of the application 2. The structure of video extended function processing according to this embodiment is the same as the structure illustrated in FIG. 11.

The system monitoring unit 150 acquires information about the remaining capacity of the battery 22 from the EC 20, as the system information about the situation of the system. The video setting processing unit 140 acquires the system information from the system monitoring unit 150, and further changes the frame rate when acquiring imaging data from the shared memory 130 based on the remaining capacity of the battery 22 included in the acquired system information and transmits the imaging data to the application 2.

FIG. 14 is a diagram illustrating an example of correspondence between thresholds of the remaining capacity of the battery 22 and decrease rates of frame rate. The illustrated example indicates that the frame rate is decreased by 20% ("-20%") in the case where the remaining capacity of the battery 22 is 20% or less, and decreased by 50% ("-50%") in the case where the remaining capacity of the battery 22 is 10% or less. The thresholds of the remaining capacity of the battery 22 and the decrease rates of frame rate illustrated in the drawing are an example, and the present invention is not limited to such.

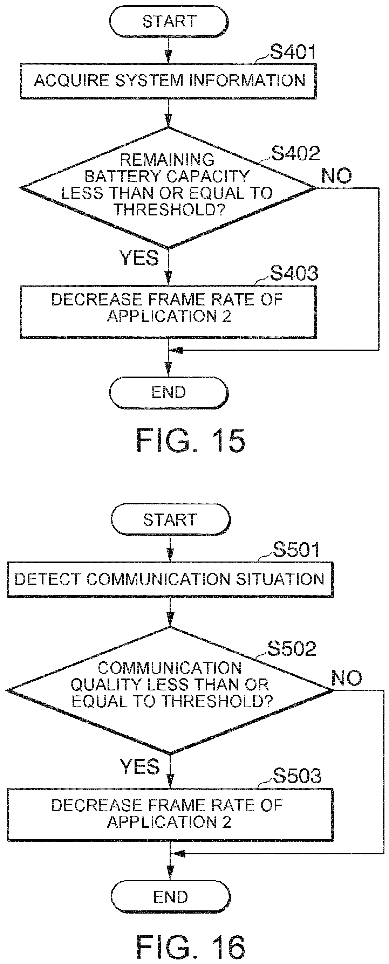

FIG. 15 is a flowchart illustrating an example of frame rate change processing based on remaining battery capacity according to this embodiment.

(Step S401) The video setting processing unit 140 acquires system information from the system monitoring unit 150.

(Step S402) The video setting processing unit 140 determines whether the remaining capacity of the battery 22 included in the system information acquired in step S401 is less than or equal to a predetermined threshold. In the case where the video setting processing unit 140 determines that the remaining capacity of the battery 22 is less than or equal to the predetermined threshold (YES), the video setting processing unit 140 advances to the process in step S403. In the case where the video setting processing unit 140 determines that the remaining capacity of the battery 22 is more than the predetermined threshold (NO), the video setting processing unit 140 does not perform the process in step S403.

(Step S403) The video setting processing unit 140 decreases the frame rate of imaging data transmitted to the application 2. For example, in the case where the video setting processing unit 140 determines that the remaining capacity of the battery 22 is 20% or less in step S402, the video setting processing unit 140 decreases the frame rate by 20%. For example, in the case where the video setting processing unit 140 determines that the remaining capacity of the battery 22 is 10% or less in step S402, the video setting processing unit 140 decreases the frame rate by 50%.

Specifically, suppose the frame rate of imaging data transmitted to the application 2 is 30 fps. In such a case, the video setting processing unit 140 changes the frame rate from 30 fps to 24 fps if the remaining capacity of the battery 22 is 20% or less, and changes the frame rate from 30 fps to 15 fps if the remaining capacity of the battery 22 is 10% or less. In the case where there are a plurality of applications 2, in a structure in which the system monitoring unit 150 is added to the structure illustrated in FIG. 10, each of the video setting processing units 140 corresponding to the respective plurality of applications 2 uniformly changes the frame rate of imaging data transmitted to the corresponding application 2 based on the remaining capacity of the battery 22.

As described above, the system information according to this embodiment is information about the remaining capacity of the battery 22 (an example of a secondary battery) for feeding power to the information processing apparatus 10. In the case where the video setting processing unit 140 determines that the remaining capacity of the battery 22 is less than or equal to a predetermined threshold based on the system information acquired by the system monitoring unit 150, the video setting processing unit 140 decreases the frame rate when acquiring imaging data from the shared memory 130 to be lower than the frame rate corresponding to the application 2. That is, in the case where the video setting processing unit 140 determines that the remaining capacity of the battery 22 is less than or equal to the predetermined threshold based on the system information acquired by the system monitoring unit 150, the video setting processing unit 140 changes the time interval when acquiring imaging data from the shared memory 130 to be longer than the time interval corresponding to the application 2.

In this way, when a plurality of applications use the camera 16, the information processing apparatus 10 can further reduce the processing load and reduce the power consumption in the case where the remaining capacity of the battery 22 increases.

### <Fifth embodiment>

A fifth embodiment of the present invention will be described below.

This embodiment describes a structure in which the frame rate is further changed depending on the situation of the system as in the third and fourth embodiments but the situation of the system is the communication network quality. For example, when conducting a conference while viewing video with other participants through a communication network by an application for video conferencing, if the quality of the communication network decreases, frame dropping occurs. Even in the case where the video is transmitted to the terminal apparatuses of the other participants at a higher frame rate, the frame rate decreases at the destinations. In view of this, in the case where the communication network quality is less than or equal to a predetermined threshold, the information processing apparatus 10 further decreases the frame rate of the application 2. For the communication network quality, any index such as communication speed, bandwidth, jitter, packet loss rate, or delay may be used. For example, the communication network quality may be based on a measurement or evaluation index of communication quality such as QoS (Quality of Service). The structure of video extended function processing according to this embodiment is the same as the structure illustrated in FIG. 11.

FIG. 16 is a flowchart illustrating an example of frame rate change processing based on communication network quality according to this embodiment.

(Step S501) The video setting processing unit 140 acquires system information from the system monitoring unit 150.

(Step S502) The video setting processing unit 140 determines whether the communication network quality included in the system information acquired in step S501 is less than or equal to a predetermined threshold. In the case where the video setting processing unit 140 determines that the communication network quality is less than or equal to the predetermined threshold (YES), the video setting processing unit 140 advances to the process in step S503. In the case where the video setting processing unit 140 determines that the communication network quality is more than the predetermined threshold (NO), the video setting processing unit 140 does not perform the process in step S503.

(Step S503) The video setting processing unit 140 decreases the frame rate of imaging data transmitted to the application 2.

Specifically, suppose the frame rate of imaging data transmitted to the application 2 is 30 fps. In the case where a decrease in communication network quality makes it impossible to transmit imaging data at 30 fps, however, the video setting processing unit 140 changes the frame rate from 30 fps to 15 fps. The video setting processing unit 140 may decrease the frame rate of imaging data transmitted to the application 2 to a maximum frame rate value at which communication is possible, depending on the decrease in communication network quality.

In the case where there are a plurality of applications 2, in a structure in which the system monitoring unit 150 is added to the structure illustrated in FIG. 10, each of the video setting processing units 140 corresponding to the respective plurality of applications 2 uniformly changes the frame rate of imaging data transmitted to the corresponding application 2 based on the communication network quality.

As described above, the system information according to this embodiment is information about the communication network quality. In the case where the video setting processing unit 140 determines that the communication network quality is less than or equal to a predetermined threshold based on the system information acquired by the system monitoring unit 150, the video setting processing unit 140 decreases the frame rate when acquiring imaging data from the shared memory 130 to be lower than the frame rate corresponding to the application 2. That is, in the case where the video setting processing unit 140 determines that the communication network quality is less than or equal to the predetermined threshold based on the system information acquired by the system monitoring unit 150, the video setting processing unit 140 changes the time interval when acquiring imaging data from the shared memory 130 to be longer than the time interval corresponding to the application 2.

In this way, when a plurality of applications use the camera 16, the information processing apparatus 10 can further reduce the processing load by decreasing the frame rate in the case where the communication network quality decreases.

### <Sixth embodiment>

A sixth embodiment of the present invention will be described below.

This embodiment describes a structure in which the frame rate is further changed depending on whether a user is present. A state in which the user is not present is a state in which no one is using the information processing apparatus 10. For example, a state in which the user is not present is a state in which the user who was using the information processing apparatus 10 has left temporarily. In this state, the need for high frame rate decreases, and therefore the information processing apparatus 10 further decreases the frame rate of the application 2. The basic structure of the information processing apparatus 10 is the same as the structure illustrated in FIGS. 1 and 3.

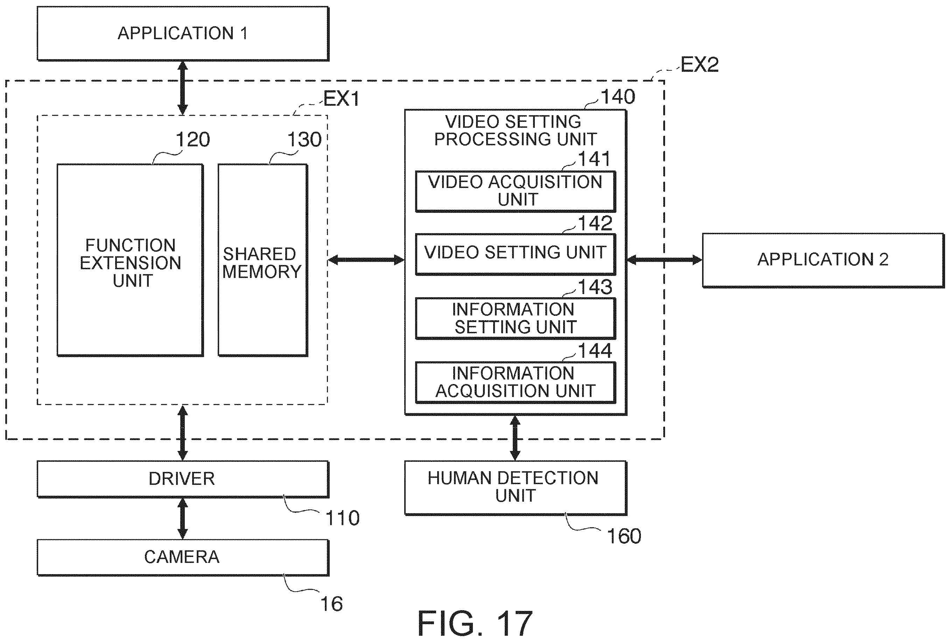

FIG. 17 is a block diagram illustrating an example of a structure of video extended function processing according to this embodiment. In the drawing, the components corresponding to the parts illustrated in FIG. 7 are given the same symbols. The example illustrated in FIG. 17 differs from the structure illustrated in FIG. 7 in that the structure of video extended function processing designated by symbol EX2 includes a human detection unit 160.

The human detection unit 160 detects whether a human is present on the side facing the display unit 15 or the camera 16. For example, a detection sensor (not illustrated) for detecting objects using infrared rays or the like may be provided on the inner surface of the first chassis 11. The human detection unit 160 may then use the detection sensor to detect whether a human is present on the side facing the display unit 15 or the camera 16. The human detection unit 160 may detect whether a human is present on the side facing the display unit 15 or the camera 16 based on imaging data of the camera 16, using an application 2 for detecting the presence or leaving of humans.

In the case where the human detection unit 160 does not detect any human on the side facing the display unit 15 or the camera 16, the video setting processing unit 140 decreases the frame rate when acquiring imaging data from the shared memory 130 to be lower than the frame rate corresponding to the application 2.

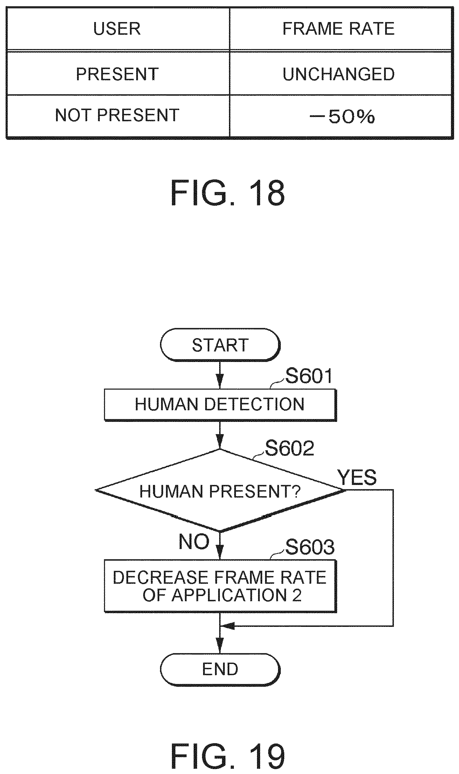

FIG. 18 is a diagram illustrating an example of correspondence between user presence/absence and decrease rates of frame rate. The illustrated example indicates that the frame rate is unchanged in the case where the user is present, and decreased by 50% ("-50%") in the case where the user is not present. The decrease rates of frame rate illustrated in the drawing are an example, and the present invention is not limited to such.

FIG. 19 is a flowchart illustrating an example of frame rate change processing based on whether the user is present according to this embodiment.

(Step S601) The video setting processing unit 140 acquires a detection result of whether a human is present, from the human detection unit 160.

(Step S602) The video setting processing unit 140 determines whether the detection result acquired in step S601 indicates that a human is present. In the case where the video setting processing unit 140 determines that the detection result indicates that no human is present (NO), the video setting processing unit 140 advances to the process in step S603. In the case where the video setting processing unit 140 determines that the detection result indicates that a human is present (YES), the video setting processing unit 140 does not perform the process in step S603.

(Step S603) The video setting processing unit 140 decreases the frame rate of imaging data transmitted to the application 2. For example, the video setting processing unit 140 decreases the frame rate of imaging data transmitted to the application 2 by 50%.

Specifically, suppose the frame rate of imaging data transmitted to the application 2 is 30 fps. In the case where no human is detected on the side facing the display unit 15 or the camera 16, for example, the video setting processing unit 140 changes the frame rate from 30 fps to 15 fps.

In the case where there are a plurality of applications 2, in a structure in which the human detection unit 160 is added to the structure illustrated in FIG. 10, each of the video setting processing units 140 corresponding to the respective plurality of applications 2 uniformly changes the frame rate of imaging data transmitted to the corresponding application 2 based on whether a user is present.

As described above, the information processing apparatus 10 according to this embodiment further includes: the display unit 15 that displays video based on the imaging data; and the human detection unit 160 that detects a human present on the side facing the display unit 15 or the camera 16. In the case where the human detection unit 160 does not detect a human on the side facing the display unit 15 or the camera 16, the video setting processing unit 140 decreases the frame rate when acquiring the imaging data from the shared memory 130 to be lower than the frame rate corresponding to the application 2. That is, in the case where the human detection unit 160 does not detect a human on the side facing the display unit 15 or the camera 16, the video setting processing unit 140 changes the time interval when acquiring the imaging data from the shared memory 130 to be longer than the time interval corresponding to the application 2.

In this way, when a plurality of applications use the camera 16, the information processing apparatus 10 can further reduce the processing load by decreasing the frame rate in the case where a user is not present on the facing side.

While the embodiments of the present invention have been described in detail above with reference to the drawings, the specific structures are not limited to such, and various design changes and the like can be made without departing from the scope of the present invention. For example, the structures described in the foregoing embodiments may be freely combined.

Although the foregoing embodiments describe an example in which imaging data captured by the camera 16 is moving images and the frame rate of the moving images is changed, the imaging data may be still images captured at a predetermined time interval and the time interval may be changed.

The foregoing information processing apparatus 10 includes a computer system. Processes in the components in the foregoing information processing apparatus 10 may be performed by recoding a program for implementing the functions of the components in the foregoing information processing apparatus 10 on a computer-readable recording medium and causing a computer system to read and execute the program recorded on the recording medium. Herein, "causing the computer system to read and execute the program recorded on the recording medium" includes installing the program in the computer system. The "computer system" herein includes an OS and hardware such as peripheral devices. The "computer system" may include a plurality of computer apparatuses connected via the Internet, a WAN, a LAN, or a network including a communication line such as a dedicated line. The "computer-readable recording medium" refers to a portable medium such as a flexible disk, a magneto-optical disc, a ROM, or a CD-ROM, or a storage device such as a hard disk embedded in the computer system. Thus, the recording medium storing the program may be a non-transitory recording medium such as a CD-ROM.

The recording medium includes a recording medium internally or externally provided to be accessible from a distribution server for distributing the program. A configuration in which the program is divided into a plurality of parts and the components in the information processing apparatus 10 combine the parts after the parts are downloaded at different timings may be adopted, and distribution servers for distributing the parts into which the program is divided may be different. The "computer-readable recording medium" includes a medium that holds the program for a certain period of time, such as a volatile memory (RAM) inside a computer system serving as a server or a client when the program is transmitted via a network. The program may be a program for implementing some of the above-described functions. The program may be a differential file (differential program) that can implement the above-described functions in combination with a program already recorded in the computer system.

Some or all of the functions included in the information processing apparatus 10 according to each of the foregoing embodiments may be implemented as an integrated circuit such as large scale integration (LSI). The above-described functions may be individually formed as a processor, or some or all thereof may be integrated into a processor. A method of forming an integrated circuit is not limited to LSI, and may be implemented by a dedicated circuit or a general-purpose processor. In the case where integrated circuit technology that can replace LSI emerges as a result of the advancement of semiconductor technology, an integrated circuit based on such technology may be used.

Although the foregoing embodiments describe an example in which the information processing apparatus 10 is a laptop PC, the information processing apparatus 10 may be a desktop PC or a tablet PC, or a camera-equipped teleconference system, communication device, robot, smartphone, game machine, or the like. The camera 16 is not limited to be contained in the information processing apparatus 10, and may be an external device connected via USB (universal serial bus) or the like.

## Claims

1. An information processing apparatus comprising:
a video acquisition unit configured to acquire imaging data from an imaging unit in response to processing of a first application;
a first video processing unit configured to store the imaging data acquired by the video acquisition unit in a shared memory so as to be usable by processing of a second application other than the first application; and
a second video processing unit configured to acquire the imaging data from the shared memory at a time interval corresponding to the second application and transmit the imaging data to the second application.

2. The information processing apparatus according to claim 1, wherein the second video processing unit is configured to acquire requirement information about the time interval from the second application, and acquire the imaging data from the shared memory at the time interval based on the acquired requirement information and transmit the imaging data to the second application.

3. The information processing apparatus according to claim 1, wherein an association table associating identification information of each of a plurality of second applications with a corresponding time interval is set beforehand, and
wherein the second video processing unit is configured to acquire the imaging data from the shared memory at the time interval based on the identification information acquired from the second application and the association table, and transmit the imaging data to the second application.

4. The information processing apparatus according to any one of claims 1 to 3, wherein the second video processing unit is configured to acquire, from the second application, processed imaging data obtained by the second application performing processing on the imaging data transmitted to the second application, and store the processed imaging data in the shared memory, and
wherein the first video processing unit is configured to acquire the processed imaging data from the shared memory and transmit the processed imaging data to the first application.

5. The information processing apparatus according to any one of claims 1 to 4, comprising a plurality of second video processing units corresponding to a respective plurality of second applications, and
wherein each of the plurality of second video processing units is configured to acquire the imaging data from the shared memory at a time interval corresponding to a corresponding second application and transmit the imaging data to the corresponding second application.

6. The information processing apparatus according to any one of claims 1 to 5, further comprising
a system information acquisition unit configured to acquire system information about a system situation, and
wherein the second video processing unit is configured to further change the time interval when acquiring the imaging data from the shared memory, based on the system information acquired by the system information acquisition unit.

7. The information processing apparatus according to claim 6, wherein the system information is information about communication network quality, and
wherein the second video processing unit is configured to change the time interval when acquiring the imaging data from the shared memory to be longer than the time interval corresponding to the second application, in the case where the second video processing unit determines that the communication network quality is less than or equal to a predetermined threshold based on the system information acquired by the system information acquisition unit.

8. The information processing apparatus according to claim 6, wherein the system information is information about processor utilization, and
wherein the second video processing unit is configured to change the time interval when acquiring the imaging data from the shared memory to be longer than the time interval corresponding to the second application, in the case where the second video processing unit determines that the processor utilization is greater than or equal to a predetermined threshold based on the system information acquired by the system information acquisition unit.

9. The information processing apparatus according to claim 6, wherein the system information is information about remaining capacity of a secondary battery for feeding power to the information processing apparatus, and
wherein the second video processing unit is configured to change the time interval when acquiring the imaging data from the shared memory to be longer than the time interval corresponding to the second application, in the case where the second video processing unit determines that the remaining capacity of the secondary battery is less than or equal to a predetermined threshold based on the system information acquired by the system information acquisition unit.

10. The information processing apparatus according to claim 6, further comprising:
a display unit configured to display video based on the imaging data; and
a human detection unit configured to detect a human present on a side facing the display unit or the imaging unit,
wherein the second video processing unit is configured to change the time interval when acquiring the imaging data from the shared memory to be longer than the time interval corresponding to the second application, in the case where the human detection unit does not detect the human.

11. A control method in an information processing apparatus, comprising:
a step in which a video acquisition unit acquires imaging data from an imaging unit in response to processing of a first application;
a step in which a first video processing unit stores the imaging data acquired by the video acquisition unit in a shared memory so as to be usable by processing of a second application other than the first application; and
a step in which a second video processing unit acquires the imaging data from the shared memory at a time interval corresponding to the second application and transmits the imaging data to the second application.
